Europäisches Patentamt

European Patent Office

Office européen des brevets

(19)

(11) Veröffentlichungsnummer: **0 008 395**
**B1**

(12) **EUROPÄISCHE PATENTSCHRIFT**

(45) Veröffentlichungstag der Patentschrift: **18.05.83**

(21) Anmeldenummer: **79102774.1**

(22) Anmeldetag: **02.08.79**

(51) Int. Cl.³: **C 02 F 1/00, B 01 D 35/22**

(54) Einrichtung zum Abtrennen von Flüssigkeiten aus Suspensionen.

(30) Priorität: **23.08.78 DE 2836866**

(43) Veröffentlichungstag der Anmeldung:
**05.03.80 Patentblatt 80/5**

(45) Bekanntmachung des Hinweises auf die Patenterteilung:
**18.05.83 Patentblatt 83/20**

(84) Benannte Vertragsstaaten:
**AT BE CH DE FR GB IT LU NL SE**

(56) Entgegenhaltungen:
**DE - A - 2 251 171**
**DE - A - 2 558 683**
**DE - B - 1 152 992**
**FR - A - 2 289 224**
**US - A - 3 437 208**
**US - A - 3 884 813**

(73) Patentinhaber: **Dynofag AG**
**Dufourstrasse 90**
**CH-8008 Zürich (CH)**

(72) Erfinder: **Hug, Franz O., Dipl.-Ing. Eth**
**Tobelweg 4**
**CH-8126 Zumikon (CH)**

(74) Vertreter: **Rottmann, Maximilian**
**Hug Interlizenz AG alte Zürcherstrasse 49**
**CH-8903 Birmensdorf/ZH (CH)**

Courier Press, Leamington Spa, England.

Einrichtung zum Abtrennen von Flüssigkeiten aus Suspensionen

Die Erfindung bezieht sich auf eine Einrichtung zum Abtrennen von Flüssigkeiten aus Suspensionen, mit wenigstens einer Filterschicht, an deren zuführseitiger Filterfläche ein mit einer Suspensionszuführung und einer Suspensions- und Feststoffabführung verbundener Suspensionsraum und an deren abführseitiger Oberfläche ein Filtratraum angeordnet ist, welcher die durch die Filterschicht tretende Flüssigkeit aufnimmt, wobei im Suspensionsraum im Bereich der Filterfläche wenigstens eine relativ zu der Filterfläche bewegte Antriebsvorrichtung vorgesehen ist.

Eine Einrichtung der vorgenannten Art ist bekannt aus DE—B 1 152 992. Diese Filtereinrichtung weist zwei zylindrische und koaxial angeordnete Filterelemente auf, deren Oberfläche mit Filterschichten versehen sind. Zwischen den benachbarten Filterelementen bzw. Filterflächen ist ein zylinderförmiger Suspensionsraum gebildet, in dem eine Antriebsvorrichtung mit mehreren Flächenelementen für die Erzeugung einer turbulenten Suspensionsströmung angeordnet ist. Diese Flächenelemente sind an Armen einer rotierenden Tragvorrichtung mit sehr grossem Abstand in Umfangsrichtung bezüglich der Rotationsachse angeordnet, so dass sich eine über den Filterumfang wellenförmig fortschreitende, beide gegenüberliegenden Filterflächen gleichmässig erfassende Suspensionsströmung schon aus diesem Grund kaum einstellen kann. Der Bildung einer solchen oszillierenden, wellenförmig über die gesamte Filterfläche fortschreitenden Strömung steht ferner die gleichförmige Ausbildung und Anordnung der Flächenelemente entgegen.

Es hat sich erwiesen, dass bei diesen bekannten Filtereinrichtungen und ihren Arbeitsverfahren mit nur turbulenter Suspensionsströmung, die gegebenenfalls zusätzlich eine stetig gegen die Filterfläche gerichtete Komponente aufweist, ausreichend hohe Scherspannungen innerhalb der strömenden Suspension im unmittelbaren Bereich der Filterflächen nur schwer in einem solchen Masse zu erzielen sind, wie es für eine langfristige Freihaltung der Filterflächen von dem sich ansammelnden Feststoff und damit für einen über längere Zeit ununterbrochenen Betrieb mit hohem Wirkungsgrad erforderlich wäre. Vielmehr müssen bei den bekannten Einrichtungen in vergleichsweise kurzen Zeitabständen Reinigungs- und Wartungsarbeiten ausgeführt werden, die zu einer vergleichsweise geringen Maschinenausnutzung führen und wegen des erforderlichen Zerlegens der Filtereinrichtung mit hohem Arbeitsaufwand verbunden sind.

Aufgabe der Erfindung ist daher die Schaffung einer Filtereinrichtung, die sich durch verbesserte Freihaltung der Filterflächen unter der Wirkung der Suspensionsströmung und damit durch einen vergleichsweise hohen Ausnutzungsgrad und geringen Wartungsaufwand auszeichnen. Die erfindungsgemässe Lösung dieser Aufgabe ist bestimmt durch die im Anspruch 1 angegebenen Merkmale.

Diese Lösung zeichnet sich aus durch eine Umlenkung der Suspensionsströmung im Sinne einer oszillierenden Normalbewegung zur Filterfläche mit Hilfe der in Bewegungsrichtung aufeinanderfolgend angeordneten Flächenelementen, die in bezug auf die Filterfläche unterschiedliche Abstände und/oder Anstellwinkel aufweisen. Hierdurch ergibt sich eine dynamische Pumpwirkung mit starken Normalkomponenten zur Filterfläche, wobei es jedoch auf die abwechselnd entgegengesetzte Richtung dieser Pumpwirkung bei den aufeinanderfolgenden Flächenelementen der Antriebsvorrichtung ankommt. Hier führt die wechselnde Saug- und Druckwirkung auf den im Bereich der Filterfläche sich absetzenden Feststoff zu einer besonders wirksamen Auflockerung, Ablösung und Abführung des Feststoffes, d.h. zu einer hochwirksamen Freihaltung der Filterfläche. Besonders vorteilhaft wird diese Zwangsumlenkung, die mit Hilfe von entsprechend angestellten Flächenelementen erfolgt, kombiniert mit der vorerwähnten Anordnung von Durchlässen zwischen den Flächenelementen. Hierdurch ergeben sich grössere Schwingungsamplituden und eine verstärkte Wirbelbildung innerhalb der Suspensionsströmung.

Die Erfindung wird weiter anhand von in den Zeichnungen schematisch angedeuteten Ausführungsbeispielen erläutert. Hierin zeigt:

Fig. 1 ein Blockschema einer Suspensionsfilteranlage mit einer Mehrfach-Scheibenfilteranordnung und rotierender Strömungs-Antriebseinrichtung im Axialschnitt und

Fig. 2 eine perspektivische Darstellung eines Teiles der Fitlereinrichtung gemäss Fig. 1.

Weiterhin zeigen die

Fig. 3 bis 9 verschiedene Ausführungen von rotierenden Antriebsvorrichtungen mit beispielhaft ausgebildeten Flächenelementen für die Strömungsumlenkung in schematischer Abwicklungsdarstellung.

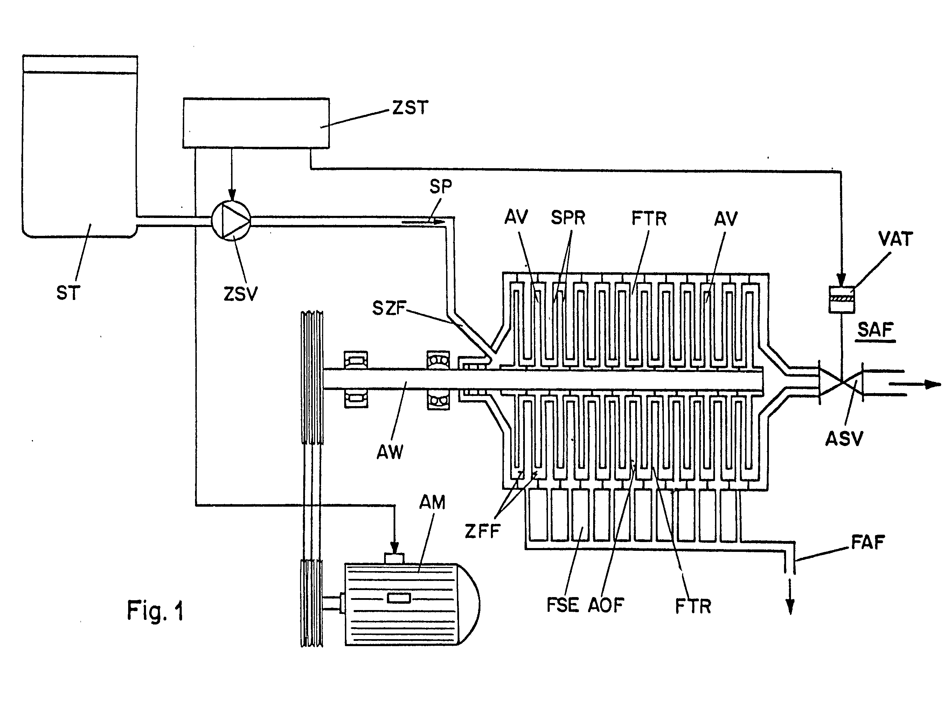

Bei der in Fig. 1 dargestellten Anlage wird eine Suspension SP aus einem Tank ST über ein Zuführsteuerventil ZSV einer Filtermaschine zugeleitet, die als Mehrfach-Koaxialscheibenfilter mit Suspensionszuführung SZF, Filtratabführung FAF sowie Suspensions- und Feststoffabführung SAF ausgebildet ist. Die eigentliche Filtermaschine besteht aus den koaxial zusammengesetzten, scheibenförmigen Filterelementen FSE, die jeweils zwei axial entgegengesetzt angeordnete, zuführseitige Filterflächen ZFF aufweisen. Zwei benachbarte Filterelemente bilden zwischen ihren einander gegenüberliegenden Filterflächen ZFF eine Suspensionsraumkammer, die durch eine radial hineinragende, ebenfalls insgesamt scheibenförmige Strömungsantriebsvorrichtung AV in zwei Suspensionsräume SPR unterteilt ist. Alle scheibenförmigen Antriebsvorrichtungen sind koaxial auf einer Antriebswelle AW befestigt, die von einem Motor AM angetrieben wird.

In den Suspensionsräumen SPR tritt die Suspension mit den Filterflächen ZFF und dem daran abgesetzten Feststoff in Berührung, wobei unter der Wirkung der Antriebsvorrichtungen und der durch sie erzeugten Strömungsbewegung eine intensive Vermischung von zugeführter Suspension und Feststoff erfolgt, so dass letzterer mit der Suspensionsströmung abgeführt wird. Die durch die Filterschichten tretende und somit von der Suspension abgetrennte Flüssigkeit, das sogenannte Filtrat, sammelt sich in den auf den abführseitigen Oberflächen AOF der Filterschichten befindlichen Filtraträumen FTR und läuft über Anschlussrohre für die einzelnen Filterelemente FSE zur Filtratabführung FAF. Die mit Feststoff angereicherte Suspension strömt über die Filterflächen ZFF und wird über ein Abführsteuerventil ASV abgezogen. Die Suspensions- und Feststoffabführung SAF umfasst weiterhin einen Ventilantrieb VAT für das Abführsteuerventil ASV, das zusammen mit dem Zuführsteuerventil ZSV und dem Antriebsmotor AM an eine Zentralsteuerung ZST angeschlossen ist. Letztere stimmt die Suspensionszuführung und die Suspensions- und Feststoffabführung unter Berücksichtigung der Geschwindigkeit der Antriebsvorrichtungen und damit der Suspensions-Strömungsgeschwindigkeit an den Filterflächen ZFF derart aufeinander ab, dass eine ausreichende Dünnflüssigkeit für den laufenden Abzug der eingedickten Suspension und für das Ausspülen des sich absetzenden Feststoffes erhalten bleibt. Dabei ist der Ausspülungseffekt an den zuführseitigen Filterflächen ZFF und damit deren langfristige Freihaltung von sich absetzendem Feststoff von der Strömungsbewegung innerhalb der Suspensionräume abhängig.

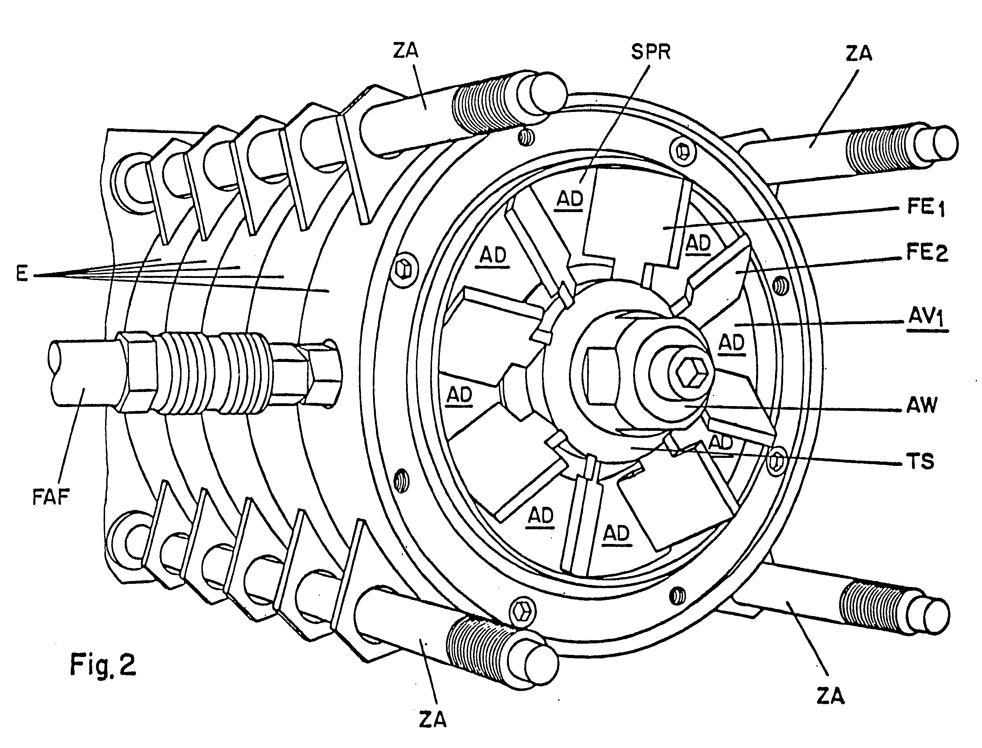

Fig. 2 gibt einen Blick in eine Suspensionsraumkammer mit einer Strömungs-Antriebsvorrichtung AV₁ und beiderseitigen Suspensionsräumen SPR im Bereich eines scheibenförmigen Filterelementes FSE frei. Die Gesamtheit der Filterelemente FSE wird koaxial mittels von Zugankern ZA zusammengehalten. Die sich so ergebende Zylinderanordnung von Filterelementen wird zentral von der Antriebswelle AW durchsetzt, auf der scheiben- oder nabenförmige Tragorgane TS der Antriebsvorrichtungen AV₁ mit bezüglich der peripheralen Bewegungsrichtung gegensinnig angestellten Antriebs-Flächenelementen FE₁ und FE₂ sitzen. Zwischen benachbarten Flächenelementen FE₁ und FE₂ befindet sich jeweils ein Axialdurchlass AD, so dass sich—wie noch näher dargestellt wird—innerhalb der Suspensionsräume eine peripheral wellenförmige, d.h. in Axialrichtung oszillierende Strömung ergibt.

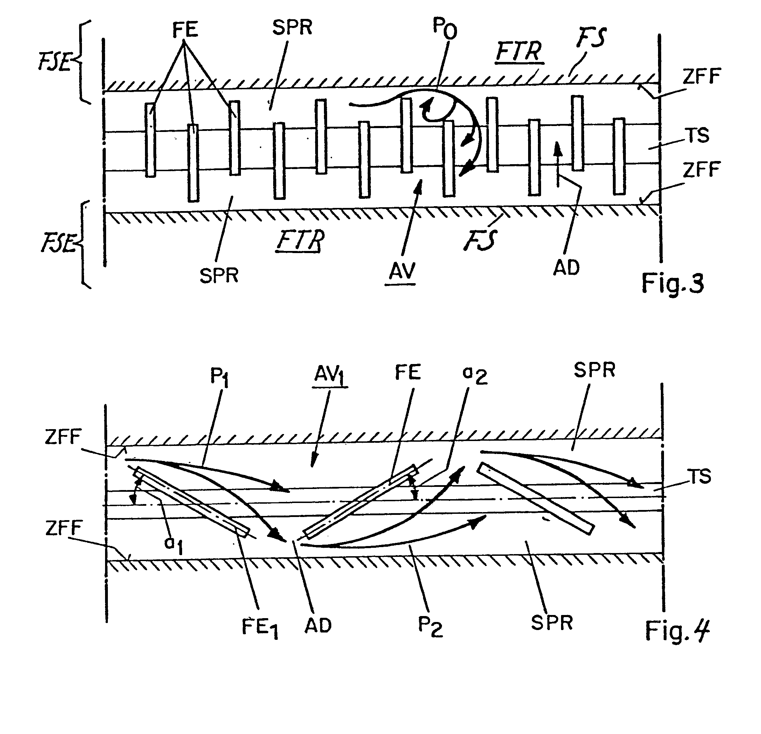

Fig. 3 zeigt in einer schematischen Abwicklung eine Strömungs-Antriebsvorrichtung AV innerhalb von Suspensionsräumen SPR, die zwischen einander gegenüberliegenden Filterflächen ZFF liegen. Diese Filterflächen gehören zu nebeneinanderliegenden Filterelementen FSE, deren jedes zwei Filterschichten FS umfasst.

Die inneren, abführseitigen Oberflächen AOF der Filterschichten FS eines Filterelementes begrenzen jeweils einen Filtratraum FTR, der in nicht näher dargestellter Weise mit der Filtrat-Sammelleitung verbunden ist.

Wesentlich an der Ausführung nach Fig. 3 ist die Verwendung von axial gerichteten Antriebs-Flächenelementen FE, die durch das scheiben- oder nabenförmige (in der Abwicklung in Umfangsrichtung gestreckt erscheinende) Tragorgan TS beispielsweise in bezug auf die gewählte Darstellung von rechts nach links durch die Suspension bewegt werden. Letztere wird von der Flächenelementanordnung teilweise mitgeführt bzw. beschleunigt, anderenteils führt sie eine zurückbleibende Relativbewegung bezüglich der Flächenelemente unter der Wirkung der Reibungs- und Trägheitskräfte aus. Diese Relativströmung der Suspension bezüglich der Antriebsvorrichtung ist schematisch durch die mit P bezeichneten Pfeile angedeutet. Danach ergeben infolge der abwechselnden axialen Versetzung der Antriebs-Flächenelemente FE in Axialrichtung bzw. in Normalrichtung zu der benachbarten Filterfläche ZFF durch die Axialdurchlässe AD zwischen den aufeinanderfolgenden Flächenelementen FE hindurchtretende und zwischen den einander gegenüberliegenden Filterflächen oszillierende Strömungswirbel in den Suspensionsräumen. Durch schematische Pfeildarstellung ist die Relativströmung P₀ bezüglich der Antriebsvorrichtung AV veranschaulicht.

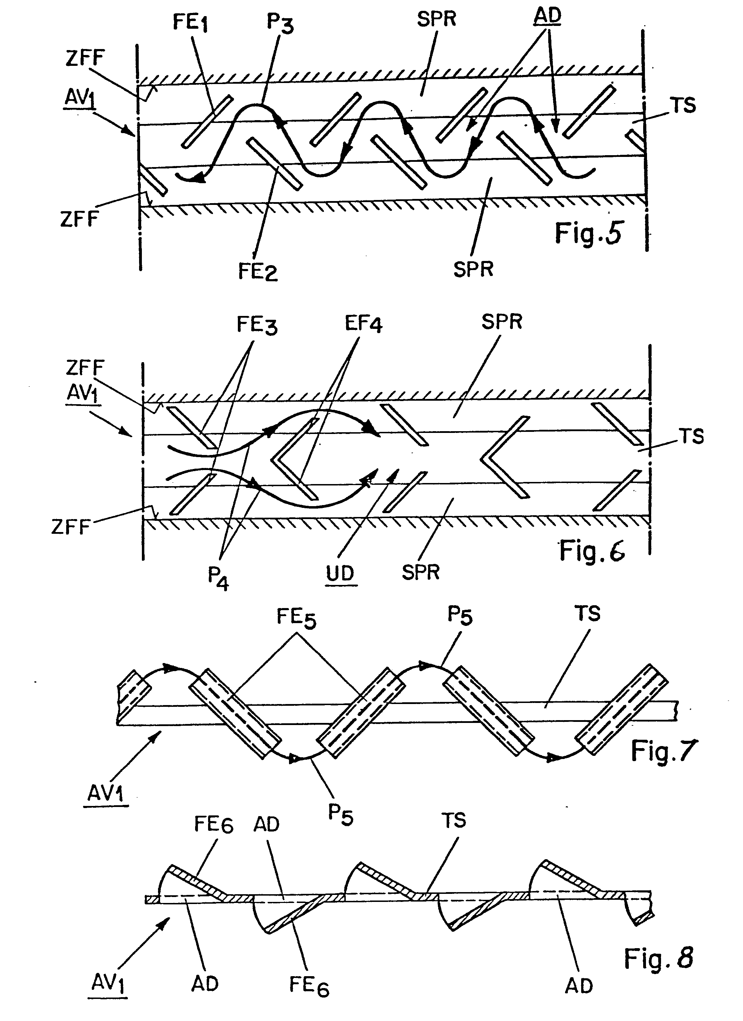

Fig. 4 zeigt eine Antriebsvorrichtung AV₁ mit an einem Tragorgan TS sitzenden Antriebs-Flächenelementen FE₁ und FE₂, die unter bezüglich der Bewegungsrichtung gegensinnig geöffneten Winkeln a₁ bzw. a₂ angestellt sind und eine dynamische Pumpwirkung in der Suspension mit Normalkomponenten zu den Filterflächen ZFF ergeben. Diese Pumpwirkung hat bei den aufeinanderfolgenden Flächenelementen entgegengesetzte Richtung, so dass sich eine aufeinanderfolgende Saug- und Druckwirkung in allgen Bereichen der Filterflächen ergeben. Die intensive Ausbildung dieser wellenartig über die Filterflächen fortschreitenden Strömungsoszillation wird durch die Axialdurchlässe AD zwischen den Flächenelementen FE₁ und FE₂ ermöglicht. Die Relativströmung bezüglich der Antriebsvorrichtung ist im Bereich der Flächenelemente FE₁ und FE₂ mit P₁ bzw. P₂ bezeichnet und durch Pfeilsysteme schematisch angedeutet. Die wellenförmige Axial- und Peripheraloszillation kann in ihrer Intensität noch weiter durch zusätzliche axiale Versetzung der aufeinanderfolgenden Antriebs-Flächenelemente FE$_1$ und FE$_2$ nach Art von Fig. 5 verstärkt werden. Die Relativströmung P$_3$ ist vereinfacht als wellenförmig durch die Flächenelementanordnung verlaufend angedeutet, sie ist tatsächlich mit intensiven Wirbeln durchsetzt, die eine vorteilhafte Zusatzwirkung hinsichtlich der Freihaltung der Filterflächen haben. Eine besonders hohe Strömungsgeschwindigkeit der Suspension sowohl normal wie auch tangential zu den Filterflächen ZFF und damit ebenfalls eine intensive dynamische Freihaltung der letzteren ergibt sich dagegen mit einer Flächenelementanordnung nach Fig. 6 mit der Relativströmung P$_4$. Letztere wird erzeugt mit Hilfe von axial im wesentlichen fluchtend angeordneten Flächenelementen FE$_3$ und FE$_4$, die im Umfangsrichtung aufeinanderfolgende Paare mit gegensinnig geöffneten Anstellwinkeln bilden, also keilartig angeordnet sind. Im Bereich der jeweils in Bewegungsrichtung divergierenden Flächenelementpaare FE$_3$ sind in Umfangsrichtung orientierte Durchlässe UD angeordnet, die für die Ausbildung des axial konvergierenden Strömungsabschnitts und damit für die anschliessende Aufteilung und Umlenkung der Strömung in Richtung gegen die Filterflächen wesentlich sind.

Fig. 7 zeigt eine Abwandlung einer Antriebsvorrichtung AV$_1$ mit rohrartigen, in bezug auf die peripherale Bewegungsrichtung geneigt angeordneten Antriebs-Flächenelementen FE$_5$, die bei abwechselnd gegensinniger Anstellung insbesondere für eine zwischen gegenüberliegenden (hier nicht dargestellten) Filterflächen oszillierende Suspensionsströmung P$_5$ geeignet sind.

Eine besonders herstellungsgünstige Ausführung einer Antriebsvorrichtung AV$_1$ mit abwechselnd gegensinnig angestellten Flächenelementen FE$_6$ ist in Fig. 8 angedeutet. Hiernach sind die Flächenelemente auf einem Teil ihrer Flächenumrissform mit dem Material eines scheibenförmigen Tragorgans TS einstückig zusammenhängend ausgebildet. Diese Konstruktion ermöglicht eine kostengünstige Herstellung aus einer Tragscheibe durch vergleichsweise einfache Stanz- und Press-Arbeitsgänge. Hierbei ergibt sich die besonders einfache Möglichkeit der Formgebung durch Ausklinken, wenn die Flächenelemente eine den zugehörigen Axialdurchlässen AD des Tragorgans TS wenigstens teilweise entsprechende Umrissform aufweisen.

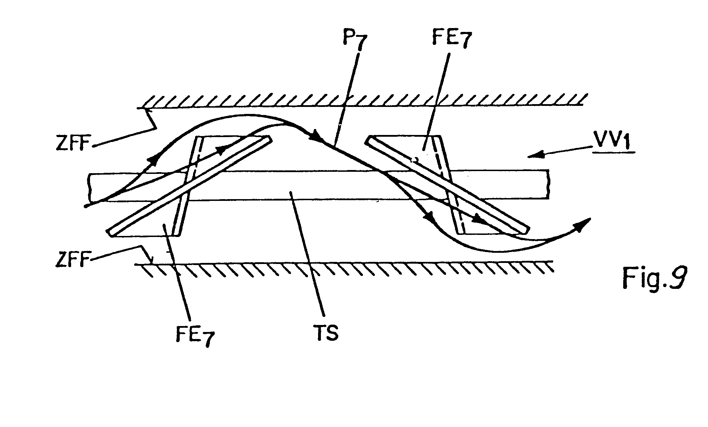

Eine hinsichtlich des Antriebswirkungsgrades und der gleichmässigen Strömungsgeschwindigkeit normal zur Filterfläche besonders günstige Ausführung einer Antriebsvorrichtung AV$_1$ mit gegensinnig angestellten Flächenelementen FE$_7$ ergibt sich gemäss Fig. 9 durch propellerartige Verwindung mit radial einwärts zunehmend steilerer Anstellung. Die angedeutete Suspensionsströmung P$_7$ ergibt

unter Berücksichtigung der unterschiedlichen Umfangsgeschwindigkeit in den verschiedenen Radienbereichen die hier angestrebte, gleichmässige Normalanströmung der verschiedenen Bereiche der Filterflächen ZFF.

**Patentansprüche**

1. Einrichtung zum Abtrennen von Flüssigkeiten aus Suspensionen, mit wenigstens einer Filterschicht (FS), an deren zuführseitiger Filterfläche (ZFF) ein mit einer Suspensionszuführung (SZF) und einer Suspensions- und Feststoffabführung (SAF) verbundener Suspensionsraum (SPR) und an deren abführseitiger Oberfläche (AOF) ein Filtratraum (FTR) angeordnet ist, welcher die durch die Filterschicht (FS) tretende Flüssigkeit aufnimmt, wobei im Suspensionsraum (PR) im Bereich der Filterfläche (ZFF) wenigstens eine relativ zu der Filterfläche (ZFF) bewegte Antriebsvorrichtung (AV, AV$_1$) mit einer Mehrzahl von in Bewegungsrichtung hintereinander sowie unter einem Winkel zur Filterfläche angeordneten Flächenelemente vorgesehen ist, dadurch gekennzeichnet, dass wenigstens zwei in Bewegungsrichtung aufeinanderfolgend angeordnete Flächenelemente (FE$_1$, FE$_2$) der Antriebsvorrichtung (AV, AV$_1$) in bezug auf eine zugeordnete Filterfläche (ZFF) abwechselnd unterschiedliche Abstände und/oder Anstellwinkel (a$_1$, a$_2$) aufweisen.

2. Einrichtung nach Anspruch 1, dadurch gekennzeichnet, dass die Antriebsvorrichtung (AV$_1$) wenigstens zwei in Bewegungsrichtung aufeinanderfolgend angeordnete Flächenelemente (FE$_1$, FE$_2$) aufweist, die in bezug auf ihre Bewegungsrichtung gegensinnig geöffnete Anstellwinkel (a$_1$, a$_2$) bezüglich einer benachbarten Filterfläche (ZFF) aufweisen.

3. Einrichtung nach Anspruch 1 oder 2, dadurch gekennzeichnet, dass an einem parallel zu einer angeordneten Filterfläche (ZFF) rotierenden Tragorgan (S) in Umfangsrichtung aufeinanderfolgend abwechselnd in Richtung parallel zur Rotationsachse gegeneinander versetzt angeordnete Flächenelemente (FE, FE$_1$, FE$_2$) vorgesehen sind.

4. Einrichtung nach Anspruch 3, dadurch gekennzeichnet, dass an dem Tragorgan (S) in Umfangsrichtungs aufeinanderfolgend Paare von in Axialrichtung im wesentlichen hintereinanderliegend angeordneten Flächenelementen (FE$_3$, FE$_4$) vorgesehen sind, dass die in Umfangsrichtung aufeinanderfolgenden Flächenelementpaare (FE$_3$, FE$_4$) in bezug auf die Bewegungsrichtung abwechselnd gegensinnig geöffnete Anstellwinkel gegeneinander aufweisen und dass jeweils im Bereich der in Bewegungsrichtung divergierend angestellten Flächenelementpaare (FE$_3$) ein Umfangsdurchlass (UD) für die Suspensionsströmung vorgesehen ist.

5. Einrichtung nach Anspruch 2, dadurch gekennzeichnet, dass an dem Tragorgan in Umfangsrichtung aufeinanderfolgend rohrartige, in bezug auf die Bewegungsrichtung geneigt angeordnete Flächenelemente (FE$_5$) angeordnet sind.

6. Einrichtung nach Anspruch 2, dadurch gekennzeichnet, dass an dem Tragorgan propellerartig in sich verwundene Flächenelemente (FE$_7$) angeordnet sind.

7. Einrichtung nach einem der Ansprüche 2 bis 6, dadurch gekennzeichnet, dass die Flächenelemente (FE$_6$) auf einem Teil ihrer Flächenumrissform mit dem Material eines scheibenförmigen Tragorgans (TS) einstückig zusammenhängend ausgebildet sind.

8. Einrichtung nach Anspruch 7, dadurch gekennzeichnet, dass die Flächenelemente (FE$_6$) eine den zugehörigen Axialdurchlässen (AD) des Tragorgans (TS) wenigstens teilweise entsprechende Umrissform aufweisen.

9. Einrichtung nach einem der Ansprüche 1 bis 8, dadurch gekennzeichnet, dass zwischen jeweils zwei einander mit gegenseitigem Abstand gegenüberliegenden, zuführseitigen Filterflächen (ZFF) wenigstens eine mit beiden Filterflächen gleichzeitig zusammenwirkende Antriebsvorrichtung (AV) mit quer zu ihrer Bewegungsrichtung durchströmbaren Durchlässen (AD) angeordnet ist.

**Revendications**

1. Installation pour séparer des liquides de suspensions, comprenant au moins une couche filtrante (FS), une chambre pour la suspension (SPR) communiquant avec une amenée pour la suspension (SZF) et une évacuation pour la suspension et pour la matière solide (SAF) étant disposée à côté de la surface filtrante (ZFF) se trouvant du côté de l'amenée, et une chambre pour le filtrat (FTR), qui reçoit le liquide traversant la couche filtrante (FS), étant disposée à côté de la surface filtrante (AOF), se trouvant du côté de l'évacuation, au moins un dispositif d'entraînement (AV, AV$_1$) déplacé par rapport à la surface filtrante (ZFF) et ayant un grand nombre d'éléments de surface disposés l'un derrière l'autre suivant le sens du déplacement et en faisant un angle avec la surface filtrante, étant prévu dans la chambre pour la suspension (PR) dans la région de la surface filtrante (ZFF), caractérisée en ce qu'au moins deux éléments de surface (FE$_1$, FE$_2$) du dispositif d'entraînement (AV, AV$_1$) se succédant dans le sens de déplacement présentent alternativement des distances et/ou des angles d'attaque (a$_1$, a$_2$) différents par rapport à une surface filtrante (ZFF) associée.

2. Installation selon la revendication 1, caractérisée en ce que le dispositif d'entraînement (AV$_1$) présente au moins deux éléments de surface (FE$_1$, FE$_2$), qui se succèdent dans le sens de déplacement et qui font des angles d'attaque (a$_1$, a$_2$) ouverts, de sens opposé par rapport à leur sens de déplacement, avec une surface filtrante (ZFF) voisine.

3. Installation selon la revendication 1 ou 2, caractérisée en ce que sur un organe support (S) tournant parallèlement à une surface filtrante (ZFF) sont prévus des éléments de surface (FE, FE$_1$, FE$_2$) se succédant dans la direction périphérique et décalés l'un par rapport à l'autre de manière alternée dans la direction parallèle à l'axe de rotation.

4. Installation selon la revendication 3, caractérisé en ce que sur l'organe support (S) sont prévus se succédant dans la direction périphérique des couples d'éléments de surface (FE$_3$, FE$_4$) disposés sensiblement l'un derrière l'autre dans la direction axiale, en ce que les couples d'éléments de surface (FE$_3$, FE$_4$) se succédant dans la direction périphérique présentent l'un par rapport à l'autre des angles d'attaque ouverts alternativement de sens opposé par rapport au sens de déplacement, et en ce que dans la région des couples d'éléments de surface (FE$_3$, FE$_4$) placés de manière divergente suivant le sens de déplacement est prévu un passage périphérique (UD) pour le courant de la suspension.

5. Installation selon la revendication 2, caractérisée en ce que sur l'organe support sont disposés des éléments de surface (FE$_5$) de type tubulaire, se succédant dans la direction périphérique et inclinés par rapport au sens de déplacement.

6. Installation selon la revendication 2, caractérisée en ce que sur l'organe support sont disposés des éléments de surface (FE$_7$) enroulés sur eux-mêmes de type en hélice.

7. Installation selon l'une des revendications 2 à 6, caractérisée en ce que les éléments de surface (FE$_6$) sont constitués d'une manière continue d'un seul tenant avec la matière d'un organe support (TS) en forme de disque sur une partie de leur contour de surface.

8. Installation selon la revendication 7, caractérisée en ce que les éléments de surface (FE$_6$) présentent une forme de contour correspondant au moins partiellement aux passages axiaux (AD) de l'organe support (TS) qui leur correspondent.

9. Installation selon l'une des revendications 1 à 8, caractérisée en ce qu'entre deux surfaces filtrantes (ZFF) se trouvant du côté de l'amenée et opposées avec un intervalle mutuel est interposé au moins un dispositif d'entraînement (AV) coopérant simultanément avec les deux surfaces filtrantes et ayant des passages (AD) pouvant être parcourus transversalement à son sens de déplacement.

**Claims**

1. Device for separating liquids from suspensions, having at least one filter layer (FS) on the feed-in side of which filter surface (ZFF) there is arranged a suspension chamber (SPR) connected with a suspension feed-in means (SZF) and a suspension and solid material discharge means (SAF) and on the discharge side of which surface (AOF) there is arranged a filtrate chamber (FTR) which accepts the liquid passing through the filter layer (FS), whereby in the suspension chamber (PR) in the region of the filter surface (ZFF) there is provided a drive device (AV, $AV_1$) movable at least with respect to the filter surface (ZFF), with a plurality of surface elements arranged one behind the other in the direction of movement as well as at an angle to the filter surface, characterized in that at least two surface elements ($FE_1$, $FE_2$) of the drive device (AV, $AV_1$) successively arranged in the direction of movement have alternately differing gaps and/or angles of incidence ($a_1$, $a_2$) with respect to an associated filter surface (ZFF).

2. Device according to claim 1, characterized in that the drive device ($AV_1$) has at least two surface elements ($FE_1$, $FE_2$) successively arranged in the direction of movement, which in respect of their direction of movement have angles of incidence ($a_1$, $a_2$) which open in the opposite sense with respect to an adjacent filter surface (ZFF).

3. Device according to claim 1 or 2, characterized in that on a support member (S) rotating parallel to an associated filter surface (ZFF) in the circumferential direction successively at alternate intervals in the direction parallel to the rotational axis there are provided oppositely displaced surface elements (FE, $FE_1$, $FE_2$).

4. Device according to claim 3, characterized in that on the support member (S) in the in circumferential direction there are provided successive pairs of surface elements ($FE_3$, $FE_4$) arranged essentially one behind the other in an axial direction, that the pairs of surface elements ($FE_3$, $FE_4$) successively arranged in the circumferential direction have angles of incidence which alternately open in the opposite sense with respect to the direction of movement and that respectively in the region of the pairs of surface elements ($FE_3$) diverging with respect to the direction of movement there is provided a circumferential perforation (UD) for the suspension to flow through.

5. Device according to claim 2, characterized in that on the support member in the circumferential direction there are provided successive tubular surface elements ($FE_5$) inclined with respect to the direction of movement.

6. Device according to claim 2, characterized in that on the support member there are arranged surface elements ($FE_7$) twisted inwardly in propeller-like fashion.

7. Device according to at least one of the claims 2 to 6, characterized in that the surface elements ($FE_6$) along a part of their surface area outline shape are cohesively formed of one piece with the material of a disc-like support member (TS).

8. Device according to claim 7, characterized in that the surface elements ($FE_6$) have an outline shape at least partly corresponding to the associated axial perforations (AD) of the support member (TS).

9. Device according to at least one of the claims 1 to 8, characterized in that between respectively two feed-in-side filter surfaces (ZFF), arranged opposite each other with a mutual gap in between, there is arranged at least one drive device (AV), interacting with both filter surfaces at the same time, having flow-through perforations (AD) arranged transversely to the direction of movement of the drive device.

Fig. 1

Fig.2

Fig.3

Fig.4

Fig. 5

Fig. 6

Fig. 7

Fig. 8

4

Fig.9